# EUROPEAN PATENT APPLICATION

(11) **EP 4 822 779 A1**
(43) Date of publication of application: **14.10.2026**
(21) Application number: 24901121.4
(22) Date of filing: 06.12.2024
(51) Int. Cl.: H01M 4/505, H01M 4/525, H01M 4/36, C01G 53/00, H01M 4/131, H01M 10/052, H01M 4/02

(54) **CATHODE ACTIVE MATERIAL FOR LITHIUM SECONDARY BATTERY, MANUFACTURING METHOD OF SAME, AND LITHIUM SECONDARY BATTERY COMPRISING SAME**

(30) Priority: 06.12.2023 KR 20230175351
(71) Applicant: POSCO Holdings Inc., Pohang-si, Gyeongsangbuk-do 37859 (KR)
(72) Inventor: NAM, Sang Cheol, Pohang-si, Gyeongsangbuk-do 37859 (KR); YU, Byongyong, Pohang-si, Gyeongsangbuk-do 37859 (KR); CHOI, Sol, Pohang-si, Gyeongsangbuk-do 37859 (KR); SONG, Jun-Hyuk, Pohang-si, Gyeongsangbuk-do 37859 (KR); CHOI, Geunho, Pohang-si, Gyeongsangbuk-do 37859 (KR)
(74) Representative: Pfenning, Meinig & Partner mbB
(86) International application number: PCT/KR2024/019933
(87) International publication number: WO 2025/121935

(57) **Abstract**

The present invention relates to a positive electrode active material for a lithium secondary battery, comprising: a lithium metal oxide having a lithium- and manganese-rich composition and having a form of a secondary particle formed by aggregation of a plurality of rod-shaped primary particles; a first coating layer containing Al and surrounding an entire surface of the secondary particle in the form of a film; a second coating layer containing Al and surrounding, in the form of a film, surfaces of at least some of the plurality of primary particles present in a core portion in the secondary particle; and a third coating layer containing Al and surrounding, in the form of a film, surfaces of at least some of the plurality of primary particles present in a shell portion in the secondary particle.

## Description

### [TECHNICAL FIELD]

The present invention relates to a positive electrode active material for a lithium secondary battery, a method for preparing the same, and a lithium secondary battery comprising the same.

### [BACKGROUND ART]

As the application range of lithium secondary batteries has expanded from small electronic devices to electric vehicles, energy storage systems, and the like, demand for positive electrode materials having excellent high energy density and high output characteristics has increased.

In this regard, lithium- and manganese-rich layered lithium transition metal oxides have a very high capacity of 240 mAh/g or more, and thus have attracted attention as next-generation positive electrode active material candidates, and research thereon has recently been actively conducted.

However, since lithium- and manganese-rich lithium transition metal oxides use an oxygen oxidation-reduction reaction in addition to transition metals, oxygen in the surface or bulk is likely to be generated as oxygen gas. As a result, a dense spinel/rock-salt structure having no or little reactivity may be easily formed in particles, thereby increasing structural instability. Such structural instability causes overall deterioration of lifespan characteristics, such as a decrease in capacity retention, voltage decay, an increase in resistance increase rate, and gas evolution, as cycles proceed.

### [DETAILED DESCRIPTION OF THE INVENTION]

### [Technical Problem]

Accordingly, an object of the present invention is to provide a positive electrode active material for a lithium secondary battery, which is a lithium metal oxide having a lithium- and manganese-rich composition and has overall improved lifespan characteristics, such as improvement in capacity retention, reduction in voltage decay, and reduction in resistance increase rate as cycles proceed, as structural stability is improved, a method for preparing the same, and a lithium secondary battery comprising the same.

### [Technical Solution]

An embodiment of the present invention provides a positive electrode active material for a lithium secondary battery, comprising: a lithium metal oxide having a lithium- and manganese-rich composition and having a form of a secondary particle formed by aggregation of a plurality of rod-shaped primary particles; a first coating layer containing Al and surrounding an entire surface of the secondary particle in the form of a film; a second coating layer containing Al and surrounding, in the form of a film, surfaces of at least some of the plurality of primary particles present in a core portion in the secondary particle; and a third coating layer containing Al and surrounding, in the form of a film, surfaces of at least some of the plurality of primary particles present in a shell portion in the secondary particle.

The second coating layer may also be present in a region within a distance of 1 µm from the center of the secondary particle.

An average thickness of the first coating layer may be greater than an average thickness of the third coating layer.

The average thickness of the third coating layer may be greater than an average thickness of the second coating layer.

The average thickness of the first coating layer may be 0.4 nm to 2.4 nm.

The average thickness of the second coating layer may be 0.34 nm to 2.2 nm.

The average thickness of the third coating layer may be 0.36 nm to 2.3 nm.

A ratio of the average thickness of the first coating layer to the average thickness of the second coating layer (first coating layer/second coating layer) may be 1.03 to 1.2.

A ratio of the average thickness of the third coating layer to the average thickness of the second coating layer (third coating layer/second coating layer) may be 1.01 to 1.15.

The first coating layer, the second coating layer, and the third coating layer may include an Al-containing compound, and the Al-containing compound may include Al₂O₃ as a main component.

The Al₂O₃ may be amorphous.

A content of Al in the positive electrode active material may be 0.04 mol% to 0.23 mol% based on the total number of moles of the lithium metal oxide.

An average porosity of the lithium metal oxide may be 10% to 20%.

The positive electrode active material may have a BET specific surface area of 3.4 m²/g to 4.3 m²/g.

The positive electrode active material may have a tap density of 1.5 g/cc to 2.0 g/cc.

The primary particles may have an average aspect ratio of 6.5 to 13.

The lithium metal oxide may be represented by the following Chemical Formula 1.

[Chemical Formula 1] Li₁₊ₐ(NiₓCo_{y}Mn_{z}M_{w})₁₋ₐO₂

In Chemical Formula 1, 0.1≤a≤0.3, 0.2≤x≤0.4, 0≤y≤0.2, 0.5≤z≤0.75, 0≤w≤0.2, x+y+z+w=1, and M is Zr, Al, B, Y, Mg, Ti, Nb, W, Sc, Si, V, Fe, Mo, Ce, Hf, Ta, La, Sr, Sn, Sb, Zn, Cu, Ge, Mo, Ru, Ir, or a combination thereof.

Another embodiment of the present invention provides a method for preparing a positive electrode active material for a lithium secondary battery, the method comprising: preparing a lithium metal oxide having a lithium- and manganese-rich composition and having a form of a secondary particle formed by aggregation of a plurality of rod-shaped primary particles; and forming a coating layer containing Al on the lithium metal oxide by an atomic layer deposition method, wherein, in the forming of the coating layer containing Al, a first coating layer containing Al and surrounding an entire surface of the secondary particle in the form of a film, a second coating layer containing Al and surrounding, in the form of a film, surfaces of at least some of the plurality of primary particles present in a core portion in the secondary particle, and a third coating layer containing Al and surrounding, in the form of a film, surfaces of at least some of the plurality of primary particles present in a shell portion in the secondary particle are formed.

The atomic layer deposition may be performed for 4 to 23 cycles.

The atomic layer deposition may be performed at a temperature of 120°C to 180°C.

Another embodiment of the present invention provides a positive electrode for a lithium secondary battery, comprising the above-described positive electrode active material.

Another embodiment of the present invention provides a lithium secondary battery comprising the positive electrode for a lithium secondary battery.

### [Advantageous Effects]

In the positive electrode active material for a lithium secondary battery according to an embodiment of the present invention, a thin and uniform Al-containing coating layer is coated on the entire surface of the secondary particles of the lithium metal oxide having a lithium- and manganese-rich composition and on the internal primary particles, thereby improving structural stability. Accordingly, overall lifespan characteristics may be improved, such as improvement in capacity retention, reduction in voltage decay, reduction in resistance increase rate, and suppression of gas evolution as cycles proceed.

### [BRIEF DESCRIPTION OF THE DRAWINGS]

FIG. 1 is a cross-sectional SEM image of a secondary particle after focused ion beam (FIB) milling of the positive electrode active material prepared according to Example 1.
FIG. 2 is an Al element energy dispersive spectroscopy (EDS) mapping image of a cross-section of a secondary particle after focused ion beam (FIB) milling of the positive electrode active material prepared according to Example 1.
FIG. 3 is a Ni element energy dispersive spectroscopy (EDS) mapping image of a cross-section of a secondary particle after focused ion beam (FIB) milling of the positive electrode active material prepared according to Example 1.
FIG. 4 is a Co element energy dispersive spectroscopy (EDS) mapping image of a cross-section of a secondary particle after focused ion beam (FIB) milling of the positive electrode active material prepared according to Example 1.
FIG. 5 is an Mn element energy dispersive spectroscopy (EDS) mapping image of a cross-section of a secondary particle after focused ion beam (FIB) milling of the positive electrode active material prepared according to Example 1.
FIG. 6 is a TEM image of one internal primary particle after focused ion beam (FIB) milling of the positive electrode active material prepared according to Example 1.
FIG. 7 is a graph showing results of cross-sectional EDS line-scan concentration analysis for one internal primary particle after focused ion beam (FIB) milling of the positive electrode active material prepared according to Example 8.
FIG. 8 is a cross-sectional TEM image of a primary particle in a shell portion after focused ion beam (FIB) milling of the positive electrode active material prepared according to Example 3.
FIG. 9 is a cross-sectional TEM image of a primary particle in a core portion after focused ion beam (FIB) milling of the positive electrode active material prepared according to Example 3.
FIG. 10 is a cross-sectional TEM image of a primary particle in a shell portion after focused ion beam (FIB) milling after 100 charge/discharge cycles of the positive electrode active material prepared according to Example 3.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

In the present specification, the term "combination(s) thereof" described in a Markush-type expression means one or more mixtures or combinations selected from the group consisting of the elements described in the Markush-type expression, and means including one or more selected from the group consisting of the elements.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### 1. Positive Electrode Active Material

The positive electrode active material for a lithium secondary battery according to an embodiment of the present invention includes a lithium transition metal oxide having a lithium- and manganese-rich composition. The lithium transition metal oxide having a lithium- and manganese-rich composition has a low nickel content, but may involve not only transition metals but also an oxidation/reduction reaction of anions (oxygen) during battery operation. In addition, excess lithium may be present not only in a lithium layer but also in a transition metal layer, and thus insertion and desorption efficiency of lithium ions may be increased. As a result, the initial discharge capacity may be 240 mAh/g or more, and capacity characteristics may be remarkably improved compared to a positive electrode material having a conventional NCM composition. In addition, the content of relatively expensive nickel and cobalt may be reduced, and the content of inexpensive manganese may be increased, which is economically advantageous.

More specifically, the lithium metal oxide may have a molar ratio of lithium to the lithium metal oxide of 1.1 to 1.3. As the content of lithium increases, the amount of lithium capable of participating in insertion and desorption of lithium ions increases, and capacity characteristics may be improved. However, when the content of lithium is too large, a problem of phase stability may occur due to excessive occurrence of an oxygen oxidation/reduction reaction, and lifespan characteristics may be deteriorated due thereto.

In addition, the lithium metal oxide may have a molar ratio of nickel to the total metals excluding lithium of 0.2 to 0.4. When the content of nickel satisfies the above range, capacity, output, and lifespan characteristics of a battery may be more preferably realized. When the content of nickel is too small, the amount of oxygen oxidation/reduction reaction becomes too large, and lifespan characteristics may be deteriorated. When the content of nickel is too large, the amount of oxygen oxidation/reduction reaction is reduced, and capacity and output characteristics may be deteriorated.

In addition, the lithium metal oxide may have a molar ratio of manganese to the total metals excluding lithium of 0.5 to 0.75. When the content of manganese is too small, manufacturing costs increase, active material safety decreases, and the effect of improving capacity due to excessive manganese content may be insignificant. When the content of manganese is too large, lifespan characteristics may be deteriorated due to excessive use of an oxygen oxidation/reduction reaction, and manganese may be eluted.

In addition, the lithium transition metal oxide may have a molar ratio of cobalt to transition metal of 0.2 or less, more specifically 0.1 or 0.05 or less, and may not contain cobalt. Cobalt is generally introduced in a predetermined amount in order to improve lifespan and output characteristics of a battery, but has a problem of being expensive. Since the lithium transition metal oxide according to the present invention includes a carbon-containing coating layer, lifespan and output characteristics may be favorably realized even when the cobalt content is reduced as described above. Accordingly, the present invention can realize both economic efficiency and product quality.

Meanwhile, the lithium transition metal oxide according to an embodiment of the present invention is in the form of a secondary particle formed by aggregation of a plurality of primary particles. In the present specification, the term "primary particle" means a minimum particle unit distinguished as one mass when a cross-section of a positive electrode active material is observed through a scanning electron microscope (SEM), and may be formed of one crystal grain or a plurality of crystal grains. In the present specification, the term "crystal grain" means a distinguishable region in which atoms in a primary particle form a lattice structure in a certain direction.

In this case, the primary particles have a rod shape. In the present specification, the term "rod shape" is a term used to distinguish the shape from a spherical shape, and means a particle having a shape closer to an elongated rod shape than to a spherical shape, and having an aspect ratio greater than 1.6. Meanwhile, in the present specification, the term "aspect ratio" means a ratio of the length of the longest side to the shortest side in a primary particle.

However, since the lithium- and manganese-rich lithium transition metal oxide having the above composition uses an oxygen oxidation-reduction reaction in addition to transition metals, oxygen in the surface or bulk is likely to be generated as oxygen gas. As a result, a dense spinel/rock-salt structure having no or little reactivity may be easily formed in particles, thereby increasing structural instability. Such structural instability causes overall deterioration of lifespan characteristics, such as a decrease in capacity retention, voltage decay, an increase in resistance increase rate, and gas evolution, as cycles proceed.

Accordingly, in the lithium transition metal oxide according to the present invention, an Al coating layer may be uniformly coated with an atomically very thin thickness on secondary particles and further on primary particles present inside the secondary particles by applying a vapor-phase atomic layer deposition (ALD) coating method using an Al-containing gas to a porous lithium transition metal oxide having a lithium- and manganese-rich composition. Accordingly, structural stability of the lithium metal oxide may be improved, thereby improving lifespan characteristics of a battery. More detailed contents of the vapor-phase atomic layer deposition coating method will be described in the preparation method described below.

More specifically, the positive electrode active material according to the present invention includes a first coating layer containing Al and surrounding the entire surface of the secondary particle in the form of a film. That is, the first coating layer is not an island-type coating layer partially and sparsely coating the surface of the secondary particle, but is a conformal-type coating layer uniformly surrounding the entire surface. In addition, the first coating layer also has excellent thickness uniformity, and may have a film form.

In addition, the positive electrode active material according to the present invention includes a second coating layer containing Al and surrounding, in the form of a film, surfaces of at least some of the plurality of primary particles present in a core portion in the secondary particle, and a third coating layer containing Al and surrounding, in the form of a film, surfaces of at least some of the plurality of primary particles present in a shell portion in the secondary particle.

In this case, in the present specification, the term "core portion in the secondary particle" means a region within a distance of (1/3)r from the center of the secondary particle, where r is a distance from the center to the surface of the secondary particle. In addition, the term "shell portion in the secondary particle" means a region within a distance of (1/3)r to r from the center of the secondary particle, where r is a distance from the center to the surface of the secondary particle.

That is, in the positive electrode active material according to the present invention, an Al-containing coating layer may be uniformly formed with a thin thickness not only on the surface of the secondary particle but also to a deep region of the internal primary particles of the secondary particle. Such a structure may be obtained by applying a vapor-phase atomic layer deposition (ALD) coating method using an Al-containing gas to a porous lithium transition metal oxide having a lithium- and manganese-rich composition. As described above, since not only the surface of the secondary particle but also a substantial number of primary particles located inside the secondary particle are coated with the Al-containing coating layer, structural stability is preferably improved, and the effect of improving lifespan characteristics of a battery may be preferably realized.

As the Al-containing coating layer is formed to a deep region of the primary particles inside the secondary particle as described above, the second coating layer may also be present in a region within a distance of 1 µm from the center of the secondary particle, and more specifically, may also be present in a region within a distance of 0.5 µm or 0.3 µm.

Meanwhile, the average thickness of the first coating layer may be greater than the average thickness of the third coating layer. In addition, the average thickness of the third coating layer may be greater than the average thickness of the second coating layer. That is, the average thickness of the Al-containing coating layer may tend to become thinner from the surface of the secondary particle toward the inside of the secondary particle. Accordingly, structural stability of the positive electrode active material is preferably improved, and the effect of improving lifespan characteristics of a battery may be preferably realized.

The average thickness of the first coating layer may be 0.4 nm to 2.4 nm, and more specifically 0.44 nm to 2.2 nm. When the average thickness of the first coating layer is too thin, the effect of improving lifespan characteristics of a battery due to improvement in structural stability of the positive electrode active material may be insignificant. When the average thickness of the first coating layer is too thick, lithium ion mobility may be hindered, and capacity or output characteristics of a battery may be deteriorated.

Meanwhile, the average thickness of the first coating layer may be measured by the following method. First, the thickness of the first coating layer with respect to one secondary particle of the positive electrode active material may be calculated by analyzing a cross-sectional TEM image after focused ion beam (FIB) milling of the secondary particle of the positive electrode active material, randomly selecting 10 positions in a surface portion of the secondary particle, and obtaining an average value of coating layer thicknesses at the selected positions. Next, the average thickness of the first coating layer may be obtained by calculating an average of the thicknesses of the first coating layer measured by the same method with respect to 20 arbitrary secondary particles of the positive electrode active material in the positive electrode active material powder.

The average thickness of the second coating layer may be 0.34 nm to 2.2 nm, and more specifically 0.37 nm to 2.1 nm. When the average thickness of the second coating layer is too thin, the effect of improving lifespan characteristics of a battery due to improvement in structural stability of the positive electrode active material may be insignificant. When the average thickness of the second coating layer is too thick, lithium ion mobility may be hindered, and capacity or output characteristics of a battery may be deteriorated.

Meanwhile, the average thickness of the second coating layer may be measured by the following method. First, the thickness of the second coating layer with respect to one secondary particle of the positive electrode active material may be calculated by analyzing a cross-sectional TEM image after focused ion beam (FIB) milling of the secondary particle of the positive electrode active material, randomly selecting 10 positions in a core portion in the secondary particle, and obtaining an average value of coating layer thicknesses at the selected positions. Next, the average thickness of the second coating layer may be obtained by calculating an average of the thicknesses of the second coating layer measured by the same method with respect to 20 arbitrary secondary particles of the positive electrode active material in the positive electrode active material powder.

The average thickness of the third coating layer may be 0.36 nm to 2.3 nm, and more specifically 0.4 nm to 2.15 nm. When the average thickness of the third coating layer is too thin, the effect of improving lifespan characteristics of a battery due to improvement in structural stability of the positive electrode active material may be insignificant. When the average thickness of the third coating layer is too thick, lithium ion mobility may be hindered, and capacity or output characteristics of a battery may be deteriorated.

Meanwhile, the average thickness of the third coating layer may be measured by the following method. First, the thickness of the third coating layer with respect to one secondary particle of the positive electrode active material may be calculated by analyzing a cross-sectional TEM image after focused ion beam (FIB) milling of the secondary particle of the positive electrode active material, randomly selecting 10 positions in a shell portion in the secondary particle, and obtaining an average value of coating layer thicknesses at the selected positions. Next, the average thickness of the third coating layer may be obtained by calculating an average of the thicknesses of the third coating layer measured by the same method with respect to 20 arbitrary secondary particles of the positive electrode active material in the positive electrode active material powder.

Meanwhile, a ratio of the average thickness of the first coating layer to the average thickness of the second coating layer (first coating layer/second coating layer) may be 1.03 to 1.2. In addition, a ratio of the average thickness of the third coating layer to the average thickness of the second coating layer (third coating layer/second coating layer) may be 1.01 to 1.15. When the ratios of the average thicknesses among the first, second, and third coating layers satisfy the above ranges, structural stability of the positive electrode active material is preferably improved, and the effect of improving lifespan characteristics of a battery may be preferably realized.

In addition, a content of Al in the positive electrode active material may be 0.04 mol% to 0.23 mol% based on the total number of moles of the lithium metal oxide, and more specifically 0.045 mol% to 0.22 mol%. When the content of Al is too small, the effect of improving lifespan characteristics of a battery due to improvement in structural stability of the positive electrode active material may be insignificant. When the content of Al is too large, lithium ion mobility may be hindered, and capacity or output characteristics of a battery may be deteriorated.

Meanwhile, the first coating layer, the second coating layer, and the third coating layer include an Al-containing compound, and the Al-containing compound may include Al₂O₃ as a main component. In this case, the Al₂O₃ may be amorphous. In the present specification, the term "main component" may mean occupying about 80 wt% or more based on the total weight of the Al-containing compound in the coating layer. As the coating layer contains amorphous Al₂O₃ as described above, there is an advantage in that the energy barrier for movement of lithium ions is lower than that of a crystalline structure, and thus lithium ions of an electrolyte can easily pass therethrough, and when uniformly coated on the surface, structural stability can also be imparted, thereby preferably improving lifespan characteristics. Meanwhile, the composition of the Al-containing compound may be confirmed through TEM-EDX analysis, and the amorphous structure may be confirmed through TEM image analysis.

Meanwhile, physical properties of the lithium metal oxide or positive electrode active material are also important for easily forming the coating layer structure according to the present invention, and will be described below.

First, the average porosity of the lithium metal oxide may be 10% to 20%, and more specifically 12% to 18%. When the average porosity of the lithium metal oxide is too small, the Al-containing coating layer may not be easily formed to a deep region inside the secondary particle, and thus the effect of improving lifespan characteristics of a battery due to improvement in structural stability of the positive electrode active material may be insignificant, and output characteristics may be deteriorated. When the average porosity of the lithium metal oxide is too large, the density of the positive electrode active material becomes too low, making it difficult to realize a high-energy positive electrode density, and particle cracks may occur during rolling. Meanwhile, the "porosity" of one secondary particle of the lithium metal oxide may be derived by cutting one secondary particle by a focused ion beam (FIB) milling method, observing a TEM image of the cut cross-section, and converting the ratio of the total area of hollow pore portions to the entire cross-sectional area of the secondary particle into a percentage value. In addition, the "average porosity" of the lithium metal oxide may be obtained by deriving an average of 30 arbitrary secondary particles in the positive electrode active material powder by the above method.

In addition, the positive electrode active material may have a BET specific surface area of 3.4 m²/g to 4.3 m²/g, and more specifically 3.6 m²/g to 4.1 m²/g. When the BET specific surface area of the positive electrode active material is too small, the density of the positive electrode active material becomes too low, making it difficult to realize a high-energy positive electrode density, and particle cracks may occur during rolling. When the BET specific surface area of the positive electrode active material is too large, the Al-containing coating layer may not be easily formed to a deep region inside the secondary particle, and thus the effect of improving lifespan characteristics of a battery due to improvement in structural stability of the positive electrode active material may be insignificant, and output characteristics may be deteriorated. In the present specification, the specific surface area may be measured using a BET method with a surface area and porosity analyzer (Micromeritics, ASAP2020).

In addition, the positive electrode active material may have a tap density of 1.5 g/cc to 2.0 g/cc, and more specifically 1.6 g/cc to 1.9 g/cc. When the tap density of the positive electrode active material is too small, it may be difficult to realize a high-energy positive electrode density, and particle cracks may occur during rolling. When the tap density of the positive electrode active material is too large, the Al-containing coating layer may not be easily formed to a deep region inside the secondary particle, and thus the effect of improving lifespan characteristics of a battery due to improvement in structural stability of the positive electrode active material may be insignificant, and output characteristics may be deteriorated. In the present specification, tap density may be measured by a method generally used in the art for measuring the packing degree of a sample per unit volume. For example, the tap density may be a density calculated through a volume change amount after a measuring container containing a sample is mechanically freely dropped from a predetermined height a predetermined number of times according to the measuring device and method specified in ASTM B527.

In addition, the primary particles may have an average aspect ratio of 6.5 to 13, and more specifically 6.8 to 12. When the average aspect ratio of the primary particles is too small, the porosity of the lithium metal oxide is reduced, so that the Al-containing coating layer may not be easily formed to a deep region inside the secondary particle, and thus the effect of improving lifespan characteristics of a battery due to improvement in structural stability of the positive electrode active material may be insignificant, and output characteristics may be deteriorated. When the average aspect ratio of the primary particles is too large, the density of the positive electrode active material becomes too low, making it difficult to realize a high-energy positive electrode density, and particle cracks may occur during rolling. In the present specification, the "aspect ratio" of a primary particle may mean a ratio of the length of the longest side to the shortest side in the primary particle. In addition, the average aspect ratio of the plurality of primary particles may be obtained by cutting the positive electrode active material by a focused ion beam (FIB) milling method and deriving an average of aspect ratios of 30 arbitrary primary particles observed during TEM image analysis of the cut cross-section.

The lithium metal oxide according to the present invention may be more specifically represented by the following Chemical Formula 1.

[Chemical Formula 1] Li₁₊ₐ(NiₓCo_{y}Mn_{z}M_{w})₁₋ₐO₂

In Chemical Formula 1, 0.1≤a≤0.3, 0.2≤x≤0.4, 0≤y≤0.2, 0.5≤z≤0.75, 0≤w≤0.2, x+y+z+w=1, and M is Zr, Al, B, Y, Mg, Ti, Nb, W, Sc, Si, V, Fe, Mo, Ce, Hf, Ta, La, Sr, Sn, Sb, Zn, Cu, Ge, Mo, Ru, Ir, or a combination thereof.

In the lithium transition metal oxide of Chemical Formula 1, lithium may be included in an amount corresponding to 1+a, and in this case, a may be 0.1≤a≤0.3. When a is too small, the effect of improving capacity characteristics due to excess lithium content may be insignificant. However, when a is too large, lifespan characteristics may be deteriorated due to deterioration in phase stability.

In the lithium transition metal oxide of Chemical Formula 1, nickel may be included in an amount corresponding to x, that is, 0.2≤x≤0.4. When the nickel content is too small, the amount of oxygen oxidation/reduction reaction becomes too large, and lifespan characteristics may be deteriorated. When the nickel content is too large, the amount of oxygen oxidation/reduction reaction is reduced, and capacity and output characteristics may be deteriorated.

In the lithium transition metal oxide of Chemical Formula 1, cobalt may be included in an amount corresponding to y, that is, 0≤y≤0.2. When the cobalt content is too small, it may be difficult to simultaneously achieve sufficient rate characteristics and high powder density of the active material. When the cobalt content is too large, the cost of raw materials may increase overall and reversible capacity may decrease.

In the lithium transition metal oxide of Chemical Formula 1, manganese may be included in an amount corresponding to z, that is, 0.5≤z≤0.75. When the manganese content is too small, production costs may increase, active material stability may decrease, and capacity may be deteriorated. When the manganese content is too large, there may be problems of deterioration in lifespan characteristics and manganese elution due to excessive use of an oxygen oxidation/reduction reaction.

In the lithium transition metal oxide of Chemical Formula 1, M, which is another doping element, may be included in an amount corresponding to w, that is, 0≤w≤0.2. The content of the doping element may be appropriately selected and controlled to realize a doping effect within a range in which electrochemical characteristics are not deteriorated. In this case, M may be Zr, Al, B, Y, Mg, Ti, Nb, W, Sc, Si, V, Fe, Y, Mo, Ce, Hf, Ta, La, Sr, Sn, Sb, Zn, Cu, Ge, Mo, Ru, Ir, or a combination thereof.

### 2. Method for Preparing Positive Electrode Active Material

Another embodiment of the present invention provides a method for preparing a positive electrode active material for a lithium secondary battery, the method comprising: preparing a lithium metal oxide having a lithium- and manganese-rich composition and having a form of a secondary particle formed by aggregation of a plurality of rod-shaped primary particles; and forming a coating layer containing Al on the lithium metal oxide by an atomic layer deposition method, wherein, in the forming of the coating layer containing Al, a first coating layer containing Al and surrounding an entire surface of the secondary particle in the form of a film, a second coating layer containing Al and surrounding, in the form of a film, surfaces of at least some of the plurality of primary particles present in a core portion in the secondary particle, and a third coating layer containing Al and surrounding, in the form of a film, surfaces of at least some of the plurality of primary particles present in a shell portion in the secondary particle are formed.

Hereinafter, the method for preparing a positive electrode active material for a lithium secondary battery according to another embodiment of the present invention will be described in detail step by step.

First, a lithium metal oxide having a lithium- and manganese-rich composition and having a form of a secondary particle formed by aggregation of a plurality of rod-shaped primary particles is prepared.

More specifically, the lithium metal oxide may be prepared by a process including: forming a metal-containing solution by mixing a nickel raw material, a manganese raw material, and a solvent; forming a reaction solution by introducing the metal-containing solution, a complexing agent-containing solution, and a pH adjusting agent-containing solution into a reactor; forming a metal precursor by coprecipitating the reaction solution; and forming a lithium metal oxide by mixing the metal precursor and a lithium raw material and then calcining the mixture.

First, a metal-containing solution is formed by mixing a nickel raw material, a manganese raw material, and a solvent.

Of course, a cobalt raw material may be further mixed, if necessary, during the mixing.

The nickel raw material is not particularly limited as long as it is used in the art when preparing a positive electrode active material precursor. For example, the nickel raw material may be a nickel-containing sulfate, acetate, nitrate, halide, sulfide, hydroxide, oxide, or oxyhydroxide, and specifically may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, a nickel fatty acid salt, a nickel halide, or a combination thereof, but is not limited thereto.

The manganese raw material is not particularly limited as long as it is used in the art when preparing a positive electrode active material precursor. For example, the manganese raw material may be a manganese-containing sulfate, acetate, nitrate, halide, sulfide, hydroxide, oxide, oxyhydroxide, or a combination thereof, and specifically may be a manganese salt such as MnSO₄, MnCO₃, Mn(NO₃)₂, manganese acetate, manganese dicarboxylate, manganese citrate, or manganese fatty acid salt, a manganese oxide such as Mn₂O₃, MnO₂, or Mn₃O₄, an oxyhydroxide, manganese chloride, or a combination thereof, but is not limited thereto.

The cobalt raw material is not particularly limited as long as it is used in the art when preparing a positive electrode active material precursor. For example, the cobalt raw material may be a cobalt-containing sulfate, acetate, nitrate, halide, sulfide, hydroxide, oxide, oxyhydroxide, or the like, and specifically may be CoSO₄, CoSO₄·7H₂O, Co(OH)₂, CoOOH, Co(OCOCH₃)₂·4H₂O, Co(NO₃)₂·6H₂O, or a combination thereof, but is not limited thereto.

The solvent is not particularly limited as long as it can dissolve the metal raw materials, and may be, for example, water.

Next, the metal-containing solution, the complexing agent-containing solution, and the pH adjusting agent-containing solution are introduced into a reactor to form a reaction solution.

The complexing agent-containing solution serves to form a complex, and may include, as a complexing agent, for example, NH₃, NH₄OH, (NH₄)₂SO₄, NH₄NO₃, NH₄Cl, CH₃COONH₄, NH₄CO₃, or a combination thereof, but is not limited thereto. Meanwhile, the complexing agent-containing solution may be used in the form of an aqueous solution, and in this case, water, or a mixture of water and an organic solvent uniformly miscible with water, for example, alcohol or the like, may be used as a solvent.

The pH adjusting agent-containing solution serves as a precipitating agent or pH adjuster, and may include an alkaline compound such as a hydroxide of an alkali metal or alkaline earth metal, such as NaOH, KOH, or Ca(OH)₂, a hydrate thereof, or a combination thereof. Meanwhile, the pH adjusting agent-containing solution may also be used in the form of an aqueous solution, and in this case, water, or a mixture of water and an organic solvent uniformly miscible with water, for example, alcohol or the like, may be used as a solvent.

In this case, a ratio of an input molar rate (mol/hr) of the complexing agent in the complexing agent-containing solution to an input molar rate (mol/hr) of the total metals in the metal-containing solution may be 0.5 to 1.5, and more specifically 0.7 to 1.3. When the input molar rate of the complexing agent relative to the input molar rate of the total metals satisfies the above range, the porosity of the metal precursor is appropriately controlled, and the average porosity of the final product, that is, the lithium metal oxide, may be easily obtained within the range according to the present invention.

The total metal concentration of the metal-containing solution may be 2.0 M to 3.0 M (mol/L), and more specifically 2.2 M to 2.8 M (mol/L). When the total metal concentration of the metal-containing solution satisfies the above range, the porosity of the metal precursor is appropriately controlled, and the average porosity of the final product, that is, the lithium metal oxide, may be easily obtained within the range according to the present invention.

In addition, the complexing agent concentration of the complexing agent-containing solution may be 12 M to 16 M (mol/L), and more specifically 13 M to 15 M (mol/L). When the complexing agent concentration of the complexing agent-containing solution satisfies the above range, the porosity of the metal precursor is appropriately controlled, and the average porosity of the final product, that is, the lithium metal oxide, may be easily obtained within the range according to the present invention.

Next, the reaction solution is coprecipitated to form a metal precursor.

The coprecipitation reaction may be performed by stirring the reaction solution.

In this case, the coprecipitation reaction may be performed under an inert atmosphere such as nitrogen or argon.

In addition, the coprecipitation reaction may be performed at a temperature of 30°C to 70°C, and more specifically at a temperature of 40°C to 60°C.

Particles of a nickel-manganese(-cobalt-doping element) hydroxide are generated by the above process and precipitated in the reaction solution. The precipitated precursor particles may be separated according to a conventional method, washed with water, and dried to obtain a precursor. The precursor may be a secondary particle formed by aggregation of primary particles.

In this case, the molar ratio of nickel, cobalt, and manganese in the precursor may be controlled by controlling the concentrations of the nickel raw material, the cobalt raw material, and the manganese raw material.

Accordingly, the molar ratio of manganese (Mn) to metal (M) (Mn/M) in the metal precursor may be 0.5 to 0.75. In addition, the molar ratio of nickel (Ni) to metal (M) (Ni/M) in the metal precursor may be 0.2 to 0.4. In addition, the molar ratio of cobalt (Co) to metal (M) (Co/M) in the metal precursor may be 0.2 or less, more specifically 0.1 or less or 0.05 or less, and the metal precursor may not contain cobalt. The technical significance of controlling the content of each metal is the same as described above, and thus a description thereof will be omitted.

Meanwhile, a doping element may be doped in the preparation step of the positive electrode active material precursor. In this case, the doping element may be doped into the metal precursor by additionally introducing a doping raw material into the transition metal-containing solution and performing a coprecipitation reaction.

Next, the metal precursor and a lithium raw material are mixed and then calcined to form a lithium metal oxide.

In this case, the lithium raw material is introduced such that a molar ratio of lithium to the total metals in the metal precursor (Li/M) is 1.1 to 1.5. As the input amount of the lithium raw material is controlled within the above range, the lithium content in the lithium metal oxide may be appropriately controlled within the range according to the present invention.

As the lithium raw material, a lithium-containing sulfate, nitrate, acetate, carbonate, oxalate, citrate, halide, hydroxide, oxyhydroxide, or the like may be used, and is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

The calcination may be performed at 800°C to 900°C, and more specifically at a temperature of 820°C to 880°C. The calcination may be performed for 5 hours to 20 hours, and more specifically for 7 hours to 15 hours. When the calcination temperature or time is too low or short, a lithium transition metal oxide having a layered structure is not well formed, and electrochemical characteristics of the active material may be deteriorated. When the calcination temperature or time is too high or long, crystal defects may occur due to over-calcination, and electrochemical characteristics may be deteriorated.

In the step of forming the lithium metal oxide, the calcination may be performed under an oxygen atmosphere. As the calcination is performed under an oxygen atmosphere, sufficient oxidation of the metal precursor occurs during the calcination process, and electrochemical characteristics may be more favorably realized.

The average porosity of the lithium metal oxide prepared through the series of processes may be 10% to 20%, and more specifically 12% to 18%. By coating such a porous lithium metal oxide with Al by the atomic layer deposition method described below, a positive electrode active material having the coating structure according to the present invention may be formed.

Next, a step of forming a coating layer containing Al on the lithium metal oxide by an atomic layer deposition method is included, and the coating layer containing Al is formed.

In this case, the Al-containing coating layer may be formed as a first coating layer containing Al and surrounding the entire surface of the secondary particle in the form of a film, a second coating layer containing Al and surrounding, in the form of a film, surfaces of at least some of the plurality of primary particles present in the core portion in the secondary particle, and a third coating layer containing Al and surrounding, in the form of a film, surfaces of at least some of the plurality of primary particles present in the shell portion in the secondary particle.

More specifically, the atomic layer deposition may be performed for 4 to 23 cycles, and more specifically 5 to 22 cycles. When the number of cycles for performing the atomic layer deposition is too small, the average thicknesses of the formed coating layers (first coating layer, second coating layer, and third coating layer) become too thin overall, and the effect of improving lifespan characteristics of a battery due to improvement in structural stability of the positive electrode active material may be insignificant. When the number of cycles for performing the atomic layer deposition is too large, the average thicknesses of the formed coating layers (first coating layer, second coating layer, and third coating layer) become too thick overall, and lithium ion mobility is hindered, thereby deteriorating capacity or output characteristics of a battery.

In this case, one cycle of the atomic layer deposition may more specifically include supplying an Al-containing gas onto the lithium metal oxide to adsorb the Al-containing gas onto the lithium metal oxide; and supplying and reacting a reactant onto the lithium metal oxide on which the Al-containing gas has been adsorbed.

The Al-containing gas may be, for example, trimethylaluminum (TMA).

The reactant may be, for example, water.

Formation of the Al-containing coating layer through the atomic layer deposition method may proceed according to the following Reaction Scheme 1.

[Reaction Scheme 1] 2Al(CH₃)₃ + 3H₂O = Al₂O₃ + 6CH₄

The supply amount of the Al-containing gas may be 0.1 wt% to 0.5 wt% based on the total weight of the lithium metal oxide, and more specifically 0.15 wt% to 0.4 wt%. When the supply amount of the Al-containing gas satisfies the above range, the amount of Al introduced per cycle is appropriately controlled, and the Al content in the positive electrode active material may be appropriately obtained within the range according to the present invention.

The supply amount of the reactant may be 0.05 wt% to 0.16 wt% based on the total weight of the lithium metal oxide, and more specifically 0.07 wt% to 0.14 wt%. When the supply amount of the reactant satisfies the above range, the supply amount of the reactant per cycle is appropriately controlled, and the Al-containing coating layer in the positive electrode active material may be appropriately obtained within the range according to the present invention.

The atomic layer deposition may be performed at a pressure of 2.0 torr or less, and more specifically at a pressure of 1.5 torr or 1.0 torr or less. Accordingly, a coating raw material may be well diffused and uniformly coated to the inside of the positive electrode material, and thus there may be an advantage that the coating layer structure according to the present invention can be easily formed.

### 3. Positive Electrode and Lithium Secondary Battery

Another embodiment of the present invention provides a positive electrode for a lithium secondary battery, comprising the above-described positive electrode active material.

More specifically, the positive electrode may include a positive electrode current collector and a positive electrode active material layer disposed on the positive electrode current collector and including the above-described positive electrode active material.

The positive electrode current collector is not particularly limited as long as it has conductivity without causing a chemical change in a battery, and for example, stainless steel, aluminum, nickel, titanium, calcined carbon, or aluminum or stainless steel surface-treated with carbon, nickel, titanium, silver, or the like may be used. In addition, the positive electrode current collector may typically have a thickness of 3 µm to 500 µm, and fine irregularities may be formed on a surface of the positive electrode current collector to increase adhesion of the positive electrode active material. For example, the positive electrode current collector may be used in various forms such as a film, sheet, foil, net, porous body, foam, nonwoven fabric, and the like.

The positive electrode active material layer may include a binder and/or a conductive material together with the above-described positive electrode active material.

In this case, the binder serves to improve adhesion between positive electrode active material particles and adhesion between the positive electrode active material and the positive electrode current collector. Specific examples thereof include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylenepropylene-diene monomer rubber (EPDM rubber), sulfonated EPDM, styrene-butadiene rubber (SBR), fluororubber, or various copolymers thereof, and one of these may be used alone or a mixture of two or more thereof may be used, but the binder is not limited thereto. The binder may be included in an amount of 1 wt% to 30 wt% based on the total weight of the positive electrode active material layer.

In addition, the conductive material is used to impart conductivity to an electrode, and may be used without particular limitation as long as it has electronic conductivity without causing a chemical change in the battery to be configured. Specific examples thereof include graphite such as natural graphite or artificial graphite; carbon-based materials such as carbon black, acetylene black, Ketjen black, channel black, furnace black, lamp black, thermal black, and carbon fibers; metal powders or metal fibers such as copper, nickel, aluminum, and silver; conductive whiskers such as zinc oxide and potassium titanate; conductive metal oxides such as titanium oxide; or conductive polymers such as polyphenylene derivatives, and one of these may be used alone or a mixture of two or more thereof may be used, but the conductive material is not limited thereto. The conductive material may typically be included in an amount of 1 wt% to 30 wt% based on the total weight of the positive electrode active material layer.

The positive electrode may be prepared according to a conventional method for preparing a positive electrode, except that the above-described positive electrode active material is used.

Specifically, the positive electrode may be prepared by applying a composition for forming a positive electrode active material layer, which includes the above-described positive electrode active material and optionally a binder, a conductive material, or a solvent as needed, onto the positive electrode current collector, followed by drying and rolling. In this case, the types and contents of the positive electrode active material, binder, and conductive material are as described above.

The solvent may be a solvent generally used in the art, and examples thereof include dimethyl sulfoxide (DMSO), isopropyl alcohol, N-methylpyrrolidone (NMP), acetone, water, and the like, and one of these may be used alone or a mixture of two or more thereof may be used. The amount of the solvent used may be sufficient to dissolve or disperse the positive electrode active material, conductive material, and binder in consideration of the coating thickness of the slurry and manufacturing yield, and to have a viscosity capable of exhibiting excellent thickness uniformity during subsequent coating for preparing the positive electrode.

Alternatively, the positive electrode may be prepared by casting the composition for forming the positive electrode active material layer on a separate support, and then laminating a film obtained by peeling the composition from the support onto the positive electrode current collector.

Another embodiment of the present invention provides a lithium secondary battery comprising the above-described positive electrode for a lithium secondary battery.

More specifically, the lithium secondary battery may include a positive electrode, a negative electrode, a separator, and an electrolyte.

The lithium secondary battery may optionally further include a battery case accommodating an electrode assembly of the positive electrode, the negative electrode, and the separator, and a sealing member for sealing the battery case.

The negative electrode may include a negative electrode current collector and a negative electrode active material layer positioned on the negative electrode current collector.

The negative electrode current collector is not particularly limited as long as it has high conductivity without causing a chemical change in a battery, and for example, copper, stainless steel, aluminum, nickel, titanium, calcined carbon, copper or stainless steel surface-treated with carbon, nickel, titanium, silver, or the like, an aluminum-cadmium alloy, or the like may be used. In addition, the negative electrode current collector may typically have a thickness of 3 µm to 500 µm, and fine irregularities may be formed on a surface of the current collector, similarly to the positive electrode current collector, to enhance binding force of the negative electrode active material. For example, the negative electrode current collector may be used in various forms such as a film, sheet, foil, net, porous body, foam, nonwoven fabric, and the like.

The negative electrode active material layer may optionally include a binder and a conductive material together with a negative electrode active material. The negative electrode active material layer may be prepared, for example, by applying and drying a composition for forming a negative electrode active material layer, which includes a negative electrode active material and optionally a binder and a conductive material, on the negative electrode current collector, or by casting the composition for forming the negative electrode on a separate support, and then laminating a film obtained by peeling the composition from the support onto the negative electrode current collector.

As the negative electrode active material, a compound capable of reversible intercalation and deintercalation of lithium may be used. Specific examples thereof include carbonaceous materials such as artificial graphite, natural graphite, graphitized carbon fibers, and amorphous carbon; metallic compounds alloyable with lithium, such as Si, Al, Sn, Pb, Zn, Bi, In, Mg, Ga, Cd, Si alloys, Sn alloys, or Al alloys; metal oxides capable of doping and dedoping lithium, such as SiOβ (0<β<2), SnO₂, vanadium oxide, and lithium vanadium oxide; or composites including the metallic compound and a carbonaceous material, such as Si-C composites or Sn-C composites, and any one thereof or a mixture of two or more thereof may be used. In addition, a metallic lithium thin film may also be used as the negative electrode active material. In addition, as the carbon material, both low-crystalline carbon and high-crystalline carbon may be used. Representative examples of low-crystalline carbon include soft carbon and hard carbon, and representative examples of high-crystalline carbon include high-temperature calcined carbon such as amorphous, plate-like, flake-like, spherical, or fibrous natural graphite or artificial graphite, Kish graphite, pyrolytic carbon, mesophase pitch-based carbon fiber, meso-carbon microbeads, mesophase pitches, and petroleum or coal tar pitch-derived cokes.

The binder and the conductive material may be the same as those described above for the positive electrode.

The separator separates the negative electrode and the positive electrode and provides a movement path for lithium ions, and may be used without particular limitation as long as it is generally used as a separator in lithium secondary batteries. In particular, a separator having low resistance to ion movement of an electrolyte and excellent electrolyte solution impregnation ability is preferable. Specifically, a porous polymer film, for example, a porous polymer film made of a polyolefin-based polymer such as an ethylene homopolymer, a propylene homopolymer, an ethylene/butene copolymer, an ethylene/hexene copolymer, or an ethylene/methacrylate copolymer, or a laminated structure of two or more layers thereof may be used. In addition, a conventional porous nonwoven fabric, for example, a nonwoven fabric made of high-melting-point glass fibers, polyethylene terephthalate fibers, or the like, may also be used. In addition, a coated separator including a ceramic component or a polymer material may be used to secure heat resistance or mechanical strength, and may optionally be used as a single-layer or multilayer structure.

The electrolyte may include organic liquid electrolytes, inorganic liquid electrolytes, solid polymer electrolytes, gel-type polymer electrolytes, solid inorganic electrolytes, molten inorganic electrolytes, and the like that may be used in preparing a lithium secondary battery, but is not limited thereto.

Specifically, the organic liquid electrolyte may include an organic solvent and a lithium salt.

The organic solvent may be used without particular limitation as long as it can serve as a medium through which ions involved in an electrochemical reaction of the battery can move. Specifically, the organic solvent may include ester-based solvents such as methyl acetate, ethyl acetate, γ-butyrolactone, and ε-caprolactone; ether-based solvents such as dibutyl ether or tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methylethyl carbonate (MEC), ethylmethyl carbonate (EMC), ethylene carbonate (EC), and propylene carbonate (PC); alcohol-based solvents such as ethyl alcohol and isopropyl alcohol; nitriles such as R-CN, wherein R is a C2 to C20 linear, branched, or cyclic hydrocarbon group and may include a double-bonded aromatic ring or an ether bond; amides such as dimethylformamide; dioxolanes such as 1,3-dioxolane; or sulfolanes. Among these, carbonate-based solvents are preferable, and a mixture of a cyclic carbonate having high ionic conductivity and a high dielectric constant, which may increase charge and discharge performance of a battery, for example, ethylene carbonate or propylene carbonate, and a linear carbonate-based compound having low viscosity, for example, ethylmethyl carbonate, dimethyl carbonate, or diethyl carbonate, is more preferable. In this case, when the cyclic carbonate and the chain carbonate are mixed at a volume ratio of about 1:1 to about 1:9, performance of the electrolyte solution may be excellent.

The lithium salt may be used without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The concentration of the lithium salt is preferably used within a range of 0.1 M to 2.0 M. When the concentration of the lithium salt is included in the above range, the electrolyte has appropriate conductivity and viscosity, and thus may exhibit excellent electrolyte performance, and lithium ions may effectively move.

In addition to the electrolyte components, the electrolyte may further include one or more additives for the purpose of improving lifespan characteristics of a battery, suppressing a decrease in battery capacity, improving discharge capacity of a battery, and the like, such as a haloalkylene carbonate-based compound such as difluoroethylene carbonate, pyridine, triethyl phosphite, triethanolamine, cyclic ether, ethylenediamine, n-glyme, hexamethylphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, or aluminum trichloride. In this case, the additive may be included in an amount of 0.1 wt% to 5 wt% based on the total weight of the electrolyte.

Since the lithium secondary battery including the positive electrode active material according to the present invention as described above stably exhibits excellent discharge capacity, output characteristics, and capacity retention, it is useful for portable devices such as mobile phones, notebook computers, and digital cameras, and electric vehicle fields such as hybrid electric vehicles (HEVs).

Accordingly, another embodiment of the present invention provides a battery module including the lithium secondary battery as a unit cell, and a battery pack including the same.

The battery module or battery pack may be used as a power source for one or more medium-to-large devices selected from power tools; electric vehicles including electric vehicles (EVs), hybrid electric vehicles, and plug-in hybrid electric vehicles (PHEVs); or power storage systems.

Hereinafter, embodiments of the present invention will be described in more detail through Examples. However, the following Examples are merely preferred embodiments of the present invention, and the present invention is not limited to the following Examples.

### Preparation Example 1: Preparation of Precursor 1

### (Preparation of Precursor)

A nickel-manganese hydroxide was prepared using a 20 L coprecipitation reactor.

(Formation of Metal-Containing Solution) NiSO₄·6H₂O and MnSO₄·H₂O were dissolved in DI water to form a 2.5 M metal-containing solution. In this case, the molar ratio of Ni:Mn was adjusted to 0.33:0.67.

(Coprecipitation) Thereafter, the metal-containing solution, a 14 M NH₄(OH) aqueous solution as a complexing agent-containing solution, and a NaOH aqueous solution as a pH adjusting agent-containing solution were introduced into a coprecipitation reactor to form a reaction solution, and the reaction solution was stirred and subjected to a coprecipitation reaction. In this case, a ratio of the NH₄(OH) input molar rate (mol/hr) to the total metal input molar rate (mol/hr) into the coprecipitation reactor was 1. In addition, N₂ was purged to prevent oxidation of metal ions during the coprecipitation reaction, and the temperature in the coprecipitation reactor was maintained at 50°C.

The coprecipitation reaction was performed for a total of 22 hours to grow the metal precursor to have an average particle diameter (D50) of 8 µm, and the coprecipitated metal precursor was filtered, washed with DI water, and then vacuum-dried in an oven at 100°C for 24 hours to obtain a metal precursor powder. The composition of Precursor 1 thus formed was Ni₀.₃₃Mn₀.₆₇(OH)₂.

### Preparation Example 2: Preparation of Precursor 2

### (Preparation of Precursor)

A nickel-manganese-cobalt hydroxide was prepared using a 20 L coprecipitation reactor.

(Formation of Metal-Containing Solution) NiSO₄·6H₂O, CoSO₄·7H₂O, and MnSO₄·H₂O were dissolved in DI water to form a 2.5 M metal-containing solution. In this case, the molar ratio of Ni:Co:Mn was adjusted to 0.33:0.05:0.62.

(Coprecipitation) Thereafter, the metal-containing solution, a 14 M NH₄(OH) aqueous solution as a complexing agent-containing solution, and a NaOH aqueous solution as a pH adjusting agent-containing solution were introduced into a coprecipitation reactor to form a reaction solution, and the reaction solution was stirred and subjected to a coprecipitation reaction. In this case, a ratio of the NH₄(OH) input molar rate (mol/hr) to the total metal input molar rate (mol/hr) into the coprecipitation reactor was 1. In addition, N₂ was purged to prevent oxidation of metal ions during the coprecipitation reaction, and the temperature in the coprecipitation reactor was maintained at 50°C.

The coprecipitation reaction was performed for a total of 22 hours to grow the metal precursor to have an average particle diameter (D50) of 8 µm, and the coprecipitated metal precursor was filtered, washed with DI water, and then vacuum-dried in an oven at 100°C for 24 hours to obtain a metal precursor powder. The composition of Precursor 2 thus formed was Ni₀.₃₃Co₀.₀₅Mn₀.₆₂(OH)₂.

### Preparation Example 3: Preparation of Lithium Metal Oxide 1

Precursor 1 prepared in Preparation Example 1 and LiOH·H₂O as a lithium raw material were mixed using a mixer to form a mixture. Thereafter, the mixture was charged into a refractory material (saggar) and then placed in a box furnace. While injecting air at 180 LPH into the box furnace, calcination was performed according to a temperature profile in which the temperature was raised to 850°C for 5 hours, maintained at 850°C for 10 hours, and then cooled to room temperature for 5 hours, thereby forming a lithium metal oxide.

Thereafter, the lithium metal oxide was pulverized using a mortar and classified with 325 mesh to prepare a lithium metal oxide positive electrode active material having a lithium- and manganese-rich composition.

The composition of Lithium Metal Oxide 1 thus prepared was Li₁.₁₄Ni₀.₂₈Mn₀.₅₈O₂.

### Preparation Example 4: Preparation of Lithium Metal Oxide 2

Precursor 2 prepared in Preparation Example 2 and LiOH·H₂O as a lithium raw material were mixed using a mixer to form a mixture. Thereafter, the mixture was charged into a refractory material (saggar) and then placed in a box furnace. While injecting air at 180 LPH into the box furnace, calcination was performed according to a temperature profile in which the temperature was raised to 850°C for 5 hours, maintained at 850°C for 10 hours, and then cooled to room temperature for 5 hours, thereby forming a lithium metal oxide.

Thereafter, the lithium metal oxide was pulverized using a mortar and classified with 325 mesh to prepare a lithium metal oxide positive electrode active material having a lithium- and manganese-rich composition.

The composition of Lithium Metal Oxide 2 thus prepared was Li₁.₁₄Ni₀.₂₈Co₀.₀₄Mn₀.₅₄O₂.

### Example 1

### (1) Preparation of Positive Electrode Active Material

An atomic layer deposition (ALD) coating process was performed using Lithium Metal Oxide 1 prepared in Preparation Example 3.

A fluidized bed-type coating reactor was used, and low-vacuum conditions were maintained such that the reaction temperature was 150°C and the pressure in the chamber was maintained at 0.8 Torr. Trimethylaluminum (TMA, Al(CH₃)₃) was used as a precursor, as an Al-containing gas, and water (H₂O) was used as a reactant.

N₂ gas was used as a carrier gas and purge gas for the precursor and reactant, and was injected into the reactor at 80 sccm. The reaction sequence was such that, after the positive electrode material was introduced into the reactor, TMA was injected together with N₂ gas for 0.02 seconds so as to be chemisorbed and saturated on the base material, and then H₂O was injected for 0.02 seconds to cause a chemical reaction, so that Al₂O₃ was finally present. Thereafter, a purging time of 30 seconds was provided.

This series of processes was defined as one cycle, and a total of 10 cycles were performed.

In this case, the ALD reaction that occurred was as follows:

2Al(CH₃)₃ + 3H₂O = Al₂O₃ + 6CH₄

and methane gas, such as CH₄, was released after the reaction. The released methane gas was treated through a scrubber so as not to be released into the atmosphere.

### (2) Preparation of Lithium Secondary Battery

A slurry for preparing an electrode plate was prepared by mixing the prepared positive electrode active material:conductive material (carbon black, Denka Black):binder (PVDF, KF1100) at 92.5:3.5:4 wt%, and NMP (N-methyl-2-pyrrolidone) was added to adjust the viscosity such that the solid content was about 30%. The prepared slurry was coated on a 15 µm-thick Al foil using a doctor blade, followed by drying and rolling. At this time, the electrode loading amount was about 14 mg/cm².

As an electrolyte solution, 1 M LiPF₆ in EC:EMC=3:7 (vol%) with 3.0 vol% of FEC added based on the total amount of the electrolyte solution was used, and a CR2032 coin cell was prepared using a PP separator and a lithium negative electrode (200 µm, Honjo Metal).

### Example 7

A positive electrode active material and a lithium secondary battery were prepared in the same manner as in Example 1, except that an atomic layer deposition (ALD) coating process was performed using Lithium Metal Oxide 2 prepared in Preparation Example 4.

### Comparative Example 1

A positive electrode active material and a lithium secondary battery were prepared in the same manner as in Example 1, except that no separate coating process was performed on Lithium Metal Oxide 1 prepared in Preparation Example 3.

### Comparative Example 2

A positive electrode active material and a lithium secondary battery were prepared in the same manner as in Example 1, except that no separate coating process was performed on Lithium Metal Oxide 1 prepared in Preparation Example 4.

### Comparative Example 3

A positive electrode active material and a lithium secondary battery were prepared in the same manner as in Example 1, except that 500 nm-sized Al(OH)₃ nanopowder was dry-mixed with Lithium Metal Oxide 1 prepared in Preparation Example 3 and then subjected to coating heat treatment at 500°C to dry-coat Al. In this case, the input amount of the Al(OH)₃ nanopowder was 0.5 mol% based on the total number of moles of the lithium metal oxide.

### Comparative Example 4

A positive electrode active material and a lithium secondary battery were prepared in the same manner as in Example 1, except that 500 nm-sized Al(OH)₃ nanopowder was dry-mixed with Lithium Metal Oxide 1 prepared in Preparation Example 3 and then subjected to coating heat treatment at 500°C to dry-coat Al. In this case, the input amount of the Al(OH)₃ nanopowder was 1 mol% based on the total number of moles of the lithium metal oxide.

### Comparative Example 5

A positive electrode active material and a lithium secondary battery were prepared in the same manner as in Example 1, except that 500 nm-sized Al(OH)₃ nanopowder was dry-mixed with Lithium Metal Oxide 2 prepared in Preparation Example 4 and then subjected to coating heat treatment at 500°C to dry-coat Al. In this case, the input amount of the Al(OH)₃ nanopowder was 0.5 mol% based on the total number of moles of the lithium metal oxide.

### Comparative Example 6

A positive electrode active material and a lithium secondary battery were prepared in the same manner as in Example 1, except that 500 nm-sized Al(OH)₃ nanopowder was dry-mixed with Lithium Metal Oxide 2 prepared in Preparation Example 4 and then subjected to coating heat treatment at 500°C to dry-coat Al. In this case, the input amount of the Al(OH)₃ nanopowder was 1 mol% based on the total number of moles of the lithium metal oxide.

### Other Examples and Reference Examples

Positive electrode active materials and lithium secondary batteries were prepared by varying process conditions as shown in Table 1 below.

**[Table 1]**

| | NH₃/Metal Salt Input Molar Rate Ratio | Positive Electrode Material Composition | Coating Process Type | MA Input Amount per Cycle (wt%, based on total weight of lithium metal oxide) | Reactant Input Amount per Cycle (wt%, based on total weight of lithium metal oxide) | Number of ALD Cycles |
|---|---|---|---|---|---|---|
| Comparative Example 1 | 1 | Li_{1.14}Ni_{0.28}Mn_{0.58}O₂ | - | - | - | - |
| Comparative Example 2 | 1 | Li_{1.14}Ni_{0.28}Co_{0.04}Mn_{0.54} O₂ | - | - | - | - |
| Example 1 | 1 | Li_{1.14}Ni_{0.28}Mn_{0.58}O₂ | ALD | 0.3 | 0.11 | 10 |
| Example 2 | 1 | | | Same as above | Same as above | 15 |
| Example 3 | 1 | | | Same as above | Same as above | 20 |
| Example 4 | 1 | | | Same as above | Same as above | 7 |
| Example 5 | 1 | | | Same as above | Same as above | 5 |
| Reference Example 1 | 1 | | | Same as above | Same as above | 25 |
| Reference Example 2 | 1 | | | Same as above | Same as above | 3 |
| Example 6 | 1 | Li_{1.14}Ni_{0.28}Co_{0.04}Mn_{0.54} O₂ | | Same as above | Same as above | 10 |
| Example 7 | 1 | | | Same as above | Same as above | 15 |
| Example 8 | 1 | | | Same as above | Same as above | 20 |
| Example 9 | 1 | | | Same as above | Same as above | 7 |
| Example 10 | 1 | | | Same as above | Same as above | 5 |
| Reference Example 3 | 1 | | | Same as above | Same as above | 25 |
| Reference Example 4 | 1 | | | Same as above | Same as above | 3 |
| Comparative Example 3 | 1 | Li_{1.14}Ni_{0.28}Mn_{0.58}O₂ | Dry Al(OH)₃/ 0.5mol% | - | - | - |
| Comparative Example 4 | 1 | | Dry Al(OH)₃/ 1mol% | - | - | - |
| Comparative Example 5 | 1 | Li_{1.14}Ni_{0.28}Co_{0.04}Mn_{0.54} O₂ | Dry Al(OH)₃/ 0.5mol% | - | - | - |
| Comparative Example 6 | 1 | | Dry Al(OH)₃/ 1mol% | - | - | - |

Tables 2 and 3 below summarize the results of physical properties of positive electrode active materials and electrochemical characteristics of lithium secondary batteries according to Experimental Examples 2 and 3 described below.

**[Table 2]**

| Active Material Physical Properties | Average Thickness of First Coating Layer (nm) | Average Thickness of Second Coating Layer (nm) | Average Thickness of Third Coating Layer (nm) | Average Thickness Ratio of First Coating Layer/Second Coating Layer | Average Thickness Ratio of Third Coating Layer/Second Coating Layer | Al Element Content (mol%, based on total moles of lithium metal oxide) | Average Porosity (%) | Specific Surface Area (m²/g) | Tap Density (g/cc) |
|---|---|---|---|---|---|---|---|---|---|
| Comparative Example 1 | - | - | - | | - | - | 14 | 3.87 | 1.68 |
| Comparative Example 2 | - | - | - | | - | - | 14 | 3.86 | 1.70 |
| Example 1 | 1 | 0.86 | 0.92 | 1.16 | 1.07 | 0.1 | 14 | 3.82 | 1.72 |
| Example 2 | 1.5 | 1.34 | 1.43 | 1.12 | 1.07 | 0.15 | 14 | 3.84 | 1.74 |
| Example 3 | 2 | 1.73 | 1.89 | 1.16 | 1.09 | 0.2 | 14 | 3.81 | 1.67 |
| Example 4 | 0.7 | 0.63 | 0.67 | 1.11 | 1.06 | 0.07 | 14 | 3.78 | 1.73 |
| Example 5 | 0.5 | 0.47 | 0.49 | 1.06 | 1.04 | 0.05 | 14 | 3.77 | 1.71 |
| Reference Example 1 | 2.5 | 2.23 | 2.43 | 1.12 | 1.09 | 0.25 | 14 | 3.75 | 1.79 |
| Reference Example 2 | 0.3 | 0.28 | 0.29 | 1.07 | 1.04 | 0.03 | 14 | 3.85 | 1.68 |
| Example 6 | 1 | 0.88 | 0.94 | 1.14 | 1.07 | 0.1 | 14 | 3.85 | 1.73 |
| Example 7 | 1.5 | 1.36 | 1.45 | 1.10 | 1.07 | 0.15 | 14 | 3.84 | 1.69 |
| Example 8 | 2 | 1.77 | 1.92 | 1.13 | 1.08 | 0.2 | 14 | 3.78 | 1.71 |
| Example 9 | 0.7 | 0.64 | 0.68 | 1.10 | 1.06 | 0.07 | 14 | 3.81 | 1.77 |
| Example 10 | 0.5 | 0.47 | 0.49 | 1.06 | 1.04 | 0.05 | 14 | 3.83 | 1.81 |
| Reference Example 3 | 2.5 | 2.24 | 2.4 | 1.12 | 1.09 | 0.25 | 14 | 3.79 | 1.67 |
| Reference Example 4 | 0.3 | 0.28 | 0.29 | 1.07 | 1.04 | 0.03 | 14 | 3.8 | 1.66 |
| Comparative Example 3 | - | - | - | - | - | 0.5 | 14 | 3.92 | 1.62 |
| Comparative Example 4 | - | - | - | - | - | 1 | 14 | 3.93 | 1.58 |
| Comparative Example 5 | - | - | - | - | - | 0.5 | 14 | 3.92 | 1.63 |
| Comparative Example 6 | - | - | - | - | - | 1 | 14 | 3.9 | 1.59 |

**[Table 3]**

| Battery Performance | Formation Discharge Capacity (mAh/g) | Initial Formation Efficiency (%) | 2nd Cycle Discharge Capacity (mAh/g) | Lifespan (50 cycles, %) | Voltage Decay (mV @ 50 cycles) | Resistance Increase Rate (50 cycles, %) |
|---|---|---|---|---|---|---|
| Comparative Example 1 | 268.5 | 89.8 | 192.1 | 92.1 | 42.1 | 43.2 |
| Comparative Example 2 | 269.3 | 89.9 | 192.5 | 92.7 | 42 | 42.1 |
| Example 1 | 268.5 | 89.8 | 191 | 98.7 | 33.2 | 19.3 |
| Example 2 | 268.2 | 90.1 | 190.7 | 99.2 | 33.3 | 19.2 |
| Example 3 | 268 | 89.9 | 189.3 | 99.5 | 33.1 | 19.1 |
| Example 4 | 269.3 | 89.8 | 191.5 | 98.6 | 33.4 | 19.3 |
| Example 5 | 269.2 | 89.9 | 191.8 | 98.3 | 33.3 | 19.8 |
| Reference Example 1 | 263.7 | 88.2 | 171.2 | 98.5 | 31.7 | 17.2 |
| Reference Example 2 | 268.4 | 89.9 | 192 | 93.1 | 37.2 | 37.2 |
| Example 6 | 268.9 | 89.9 | 191.5 | 98.9 | 32.5 | 18.6 |
| Example 7 | 268.5 | 89.8 | 191.4 | 99 | 32.7 | 18.8 |
| Example 8 | 268.2 | 89.7 | 189.7 | 99.4 | 32.7 | 18.6 |
| Example 9 | 269.5 | 90.1 | 192.3 | 98.7 | 32.8 | 18.9 |
| Example 10 | 269.4 | 90.1 | 192.5 | 98.1 | 33 | 19.1 |
| Reference Example 3 | 263.9 | 88.3 | 170.4 | 99 | 32.3 | 17.4 |
| Reference Example 4 | 268.8 | 89.9 | 192.1 | 93.3 | 39.3 | 36.2 |
| Comparative Example 3 | 267.4 | 89.4 | 190.4 | 95.1 | 35.5 | 24,2 |
| Comparative Example 4 | 264.5 | 88.5 | 190.1 | 95.5 | 35.2 | 24.1 |
| Comparative Example 5 | 267.7 | 89.5 | 190.6 | 95.3 | 35.3 | 22.5 |
| Comparative Example 6 | 264.8 | 88.6 | 190.2 | 95.8 | 35.1 | 22.1 |

### Experimental Example 1: Evaluation of SEM and TEM Images and EDS Element Mapping Images of Positive Electrode Active Material

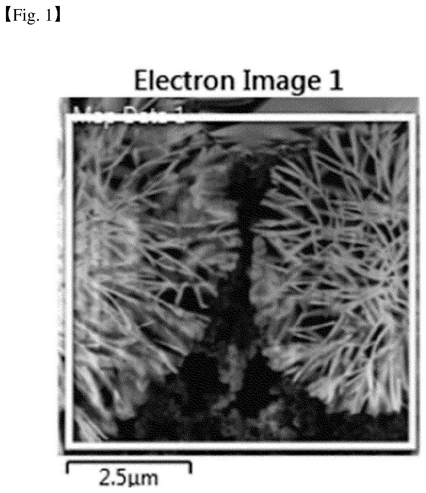

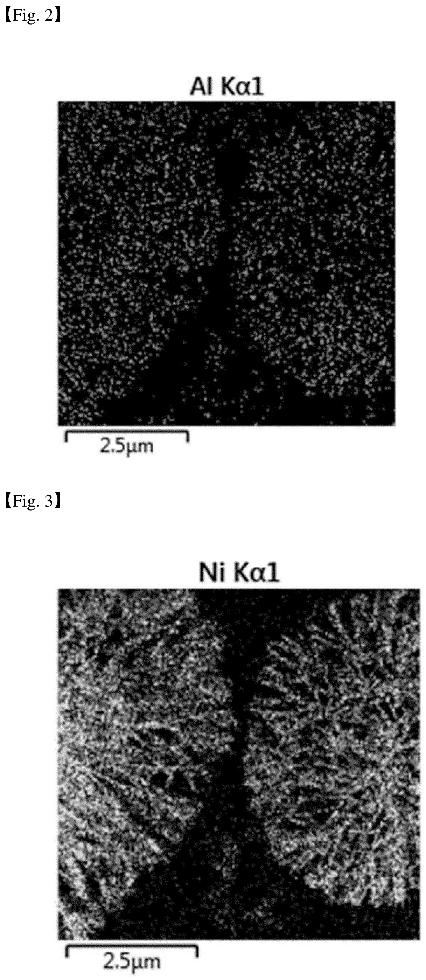

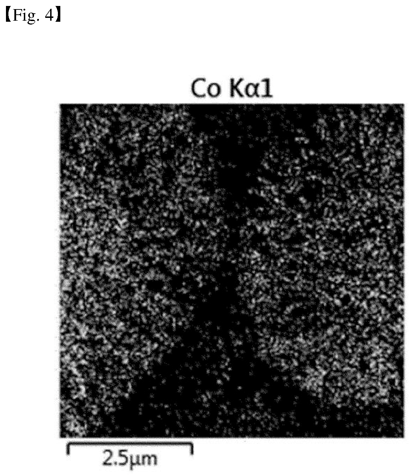

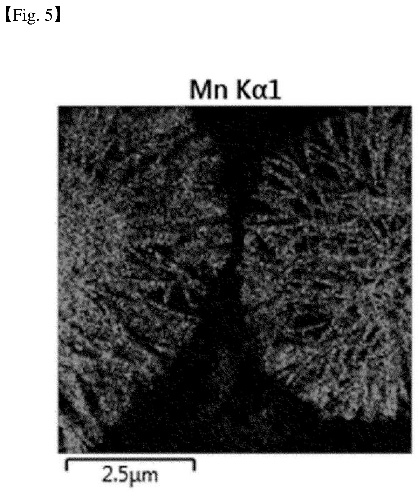

A SEM image was observed for a cross-section obtained by focused ion beam (FIB) milling of the positive electrode active material prepared according to Example 1, and is shown in FIG. 1. In addition, EDS (Energy Dispersive Spectroscopy) mapping images for each element of Al, Ni, Co, and Mn were observed for the cross-section obtained by focused ion beam (FIB) milling of the positive electrode active material prepared according to Example 1, and are shown in FIGS. 2 to 5.

Referring to FIG. 1, it was found that the positive electrode active material of Example 1 had a secondary particle shape formed by aggregation of rod-shaped primary particles.

Referring to FIGS. 2 to 5, it was confirmed that Al in the positive electrode active material of Example 1 was uniformly coated on the entire surface of the secondary particle. In addition, it was confirmed that Al in the positive electrode active material of Example 1 penetrated not only into the shell portion but also into the core portion of the secondary particle, and was uniformly coated on surfaces of the primary particles present in the shell portion and the core portion in the secondary particle. In addition, the Al coating element was present even in a region very close to the center of the secondary particle, and it was confirmed that the Al coating element was present even in a region within a distance of about 0.5 µm from the center of the secondary particle.

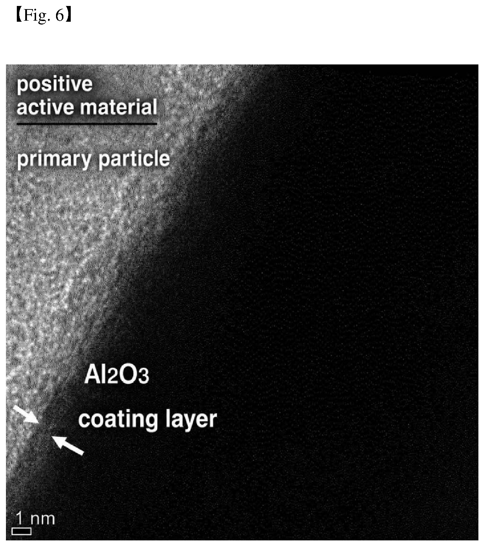

FIG. 6 is a TEM (transmission electron microscope) image of one internal primary particle after focused ion beam (FIB) milling of the positive electrode active material prepared according to Example 1. Referring thereto, it was confirmed that the Al coating layer was uniformly coated with a thin thickness on the surface of the primary particle, and it was confirmed that the Al compound was amorphous.

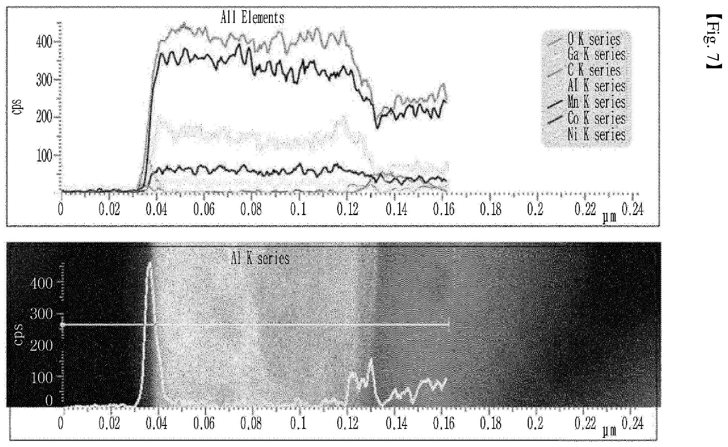

FIG. 7 is a graph showing results of cross-sectional EDS (Energy Dispersive Spectroscopy) line-scan concentration analysis for one internal primary particle after focused ion beam (FIB) milling of the positive electrode active material prepared according to Example 8. Referring to FIG. 7, it was confirmed that the Al element was intensively distributed in a surface portion of the primary particle, and through this, it was found that the Al element was uniformly coated on the surface of the primary particle.

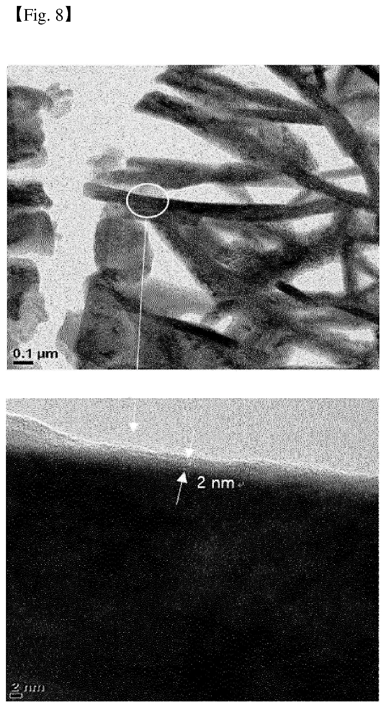

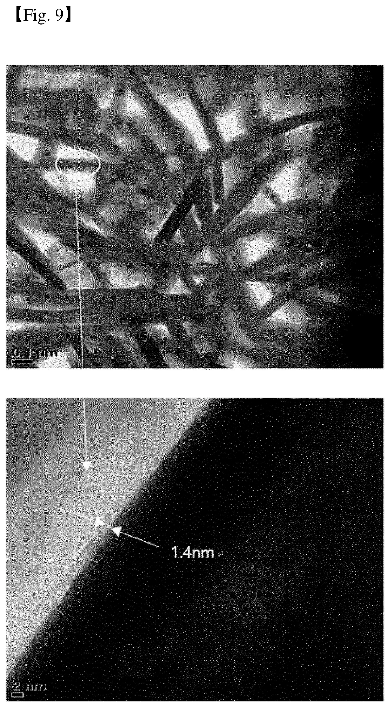

FIG. 8 is a cross-sectional TEM image of a primary particle in a shell portion after focused ion beam (FIB) milling of the positive electrode active material prepared according to Example 3. Referring to FIG. 8, it was confirmed that an Al coating layer was formed with a thickness of about 2 nm on the surface of the primary particle in the shell portion. FIG. 9 is a cross-sectional TEM image of a primary particle in a core portion after focused ion beam (FIB) milling of the positive electrode active material prepared according to Example 3. Referring to FIG. 9, it was confirmed that an Al coating layer was formed with a thickness of about 1.4 nm on the surface of the primary particle in the core portion. In addition, through these results, it was confirmed that the thickness of the coating layer decreased from the surface of the secondary particle toward the inside of the secondary particle.

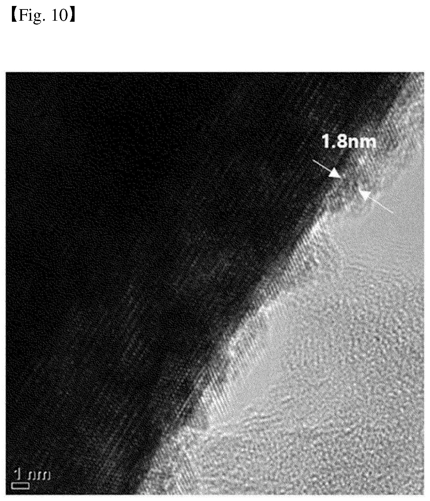

FIG. 10 is a cross-sectional TEM image of a primary particle in a shell portion after focused ion beam (FIB) milling after 100 charge/discharge cycles of the positive electrode active material prepared according to Example 3. Referring to FIG. 10, it was confirmed that, even after 100 charge/discharge cycles, the Al coating layer was well maintained on the surface of the primary particle with a thickness of about 1.8 nm. Through this, it was confirmed that the coating layer according to the present invention can be favorably coated without structural deterioration even after lifespan cycling.

### Experimental Example 2: Evaluation of Physical Properties of Positive Electrode Active Material

### (1) Evaluation of Average Thickness of First Coating Layer

The average thickness of the first coating layer was measured by the following method. First, the thickness of the first coating layer with respect to one secondary particle of the positive electrode active material was calculated by analyzing a cross-sectional TEM image after focused ion beam (FIB) milling of the secondary particle of the positive electrode active material, randomly selecting 10 positions in a surface portion of the secondary particle, and obtaining an average value of coating layer thicknesses at the selected positions. Next, the average thickness of the first coating layer was obtained by calculating an average of the thicknesses of the first coating layer measured by the same method with respect to 20 arbitrary secondary particles of the positive electrode active material in the positive electrode active material powder.

### (2) Evaluation of Average Thickness of Second Coating Layer

The average thickness of the second coating layer was measured by the following method. First, the thickness of the second coating layer with respect to one secondary particle of the positive electrode active material was calculated by analyzing a cross-sectional TEM image after focused ion beam (FIB) milling of the secondary particle of the positive electrode active material, randomly selecting 10 positions in a core portion in the secondary particle, and obtaining an average value of coating layer thicknesses at the selected positions. Next, the average thickness of the second coating layer was obtained by calculating an average of the thicknesses of the second coating layer measured by the same method with respect to 20 arbitrary secondary particles of the positive electrode active material in the positive electrode active material powder.

### (3) Evaluation of Average Thickness of Third Coating Layer

The average thickness of the third coating layer was measured by the following method. First, the thickness of the third coating layer with respect to one secondary particle of the positive electrode active material was calculated by analyzing a cross-sectional TEM image after focused ion beam (FIB) milling of the secondary particle of the positive electrode active material, randomly selecting 10 positions in a shell portion in the secondary particle, and obtaining an average value of coating layer thicknesses at the selected positions. Next, the average thickness of the third coating layer was obtained by calculating an average of the thicknesses of the third coating layer measured by the same method with respect to 20 arbitrary secondary particles of the positive electrode active material in the positive electrode active material powder.

### (4) Evaluation of Average Porosity of Lithium Metal Oxide

The "porosity" of one secondary particle of the lithium metal oxide was derived by cutting one secondary particle by a focused ion beam (FIB) milling method, observing a TEM image of the cut cross-section, and converting the ratio of the total area of hollow pore portions to the entire cross-sectional area of the secondary particle into a percentage value. In addition, the "average porosity" of the lithium metal oxide was obtained by deriving an average of 30 arbitrary secondary particles in the positive electrode active material powder by the above method.

### (5) Evaluation of Specific Surface Area of Positive Electrode Active Material

The specific surface area of the lithium transition metal oxide was measured using a BET method with a surface area and porosity analyzer (Micromeritics, ASAP2020).

### (6) Evaluation of Tap Density of Positive Electrode Active Material

Based on ASTM B527, 15 g of active material powder was placed in a 50 mL container, and the packing density was measured by tapping at 3000 cycles @ 284 cycles/min.

### (7) Evaluation of Average Aspect Ratio of Primary Particles

The average aspect ratio of primary particles was obtained by cutting the positive electrode active material by a focused ion beam (FIB) milling method and deriving an average of aspect ratios of 30 arbitrary primary particles observed during TEM image analysis of the cut cross-section. In this case, the "aspect ratio" of a primary particle means a ratio of the length of the longest side to the shortest side in the primary particle.

### Experimental Example 3: Evaluation of Electrochemical Characteristics of Lithium Secondary Battery

### (1) Evaluation of Initial Formation Discharge Capacity and Efficiency

After lithium secondary battery half cells were prepared and aged at 25°C for 10 hours, formation was performed at 45°C in order to maximally induce the initial amount of oxygen generation. In this case, for evaluation of initial capacity, 200 mAh/g was set as a 1C reference capacity, charging was performed to 4.65 V at a constant current of 0.1C, and then the mode was switched to constant voltage to continue charging until the termination current reached 0.05C. After charging, a rest time of 10 minutes was provided, and then discharging was performed to 2 V at a constant current of 0.1C based on a 1C reference capacity of 200 mAh/g.

### (2) Evaluation of 2nd Cycle Discharge Capacity

After the formation, a second charge and discharge test was performed under conditions of charging to 4.4 V and discharging to 2.5 V to evaluate a 2nd cycle discharge capacity.

### (3) Evaluation of Room-Temperature Capacity Retention (25°C, 50 cycles)

After lithium secondary battery half cells were prepared, charging was performed at 25°C to 4.6 V at a constant current of 0.5C, and then the mode was switched to constant voltage to continue charging until the termination current reached 0.05C. After charging, a rest time of 10 minutes was provided, and then discharging was performed to 2.5 V at a constant current of 0.2C. From the second cycle, charge and discharge were performed 50 times under the same charge/discharge cycle conditions except that the charge termination voltage was set to 4.4 V, and in this case, capacity retention of the 50th cycle relative to the first cycle was calculated.

### (4) Evaluation of Average Voltage Decay

When a voltage at a half point of energy obtained by multiplying discharge charge amount and voltage in a charge/discharge voltage region is defined as an average voltage, a difference between an initial average voltage and an average voltage after 50 cycles was defined as average voltage decay and measured.

### (5) Evaluation of Room-Temperature Resistance Increase Rate (25°C, 50 cycles)

After lithium secondary battery half cells were prepared, charging was performed at 25°C to 4.25 V at a constant current of 0.5C, and then the mode was switched to constant voltage to continue charging until the termination current reached 0.05C. After charging, a rest time of 10 minutes was provided, and then discharging was performed to 2.5 V at a constant current of 1.0C. Charge and discharge were performed 50 times under these charge/discharge cycle conditions, and in this case, the resistance increase rate of the 50th cycle relative to the first cycle was calculated.

Referring to Tables 1 to 3, it was confirmed that, in the Examples in which the process conditions according to the present invention were appropriately controlled, various physical properties including the average thickness of the first coating layer were appropriately obtained within the ranges according to the present invention. Accordingly, it was confirmed that lifespan characteristics of the battery were very preferably realized in terms of capacity retention, average voltage decay, and resistance increase rate.

In contrast, in the case of Comparative Examples 1 and 2 in which no coating was performed, it was confirmed that lifespan characteristics, such as capacity retention, average voltage decay, and resistance increase rate, were significantly deteriorated compared to the Examples.

In addition, in the case of Comparative Examples 3 to 7 to which a conventional dry Al coating process was applied, it was confirmed that the formation discharge capacity was somewhat lower than those of the Examples, and thus capacity characteristics were deteriorated, and the effects of improving lifespan characteristics, such as capacity retention, average voltage decay, and resistance increase rate, were lower than those of Comparative Examples 1 and 2.

In addition, in the case of Reference Examples 1 and 3 in which the number of ALD cycles was too large, it was confirmed that the average thickness of the first coating layer and the like were obtained to be too thick. As a result, it was confirmed that the formation discharge capacity, initial formation efficiency, and 2nd cycle discharge capacity were all somewhat deteriorated compared to those of the Examples.

In addition, in the case of Reference Examples 2 and 4 in which the number of ALD cycles was too small, it was confirmed that the average thickness of the first coating layer and the like were obtained to be too thin. As a result, it was confirmed that the effects of improving lifespan characteristics, such as capacity retention, average voltage decay, and resistance increase rate, were somewhat lower than those of the Examples.

In addition, in the case of Reference Example 5 in which the ALD performance temperature was too low, it was confirmed that the coating layer was not well formed, and thus the average thickness of the first coating layer and the like were obtained to be too thin. As a result, it was confirmed that the effects of improving lifespan characteristics, such as capacity retention, average voltage decay, and resistance increase rate, were somewhat lower than those of the Examples.

In addition, in the case of Reference Example 6 in which the ALD performance temperature was too high, it was confirmed that the effects of improving lifespan characteristics, such as capacity retention, average voltage decay, and resistance increase rate, were somewhat lower than those of the Examples.

Although preferred embodiments of the present invention have been described above, the present invention is not limited thereto, and various modifications may be made and practiced within the scope of the claims, the detailed description of the invention, and the accompanying drawings, and it is natural that such modifications also fall within the scope of the present invention.

Accordingly, the substantial scope of rights of the present invention shall be defined by the appended claims and equivalents thereof.

## Claims

1. A positive electrode active material for a lithium secondary battery, comprising:
a lithium metal oxide having a lithium- and manganese-rich composition and having a form of a secondary particle formed by aggregation of a plurality of rod-shaped primary particles;
a first coating layer containing Al and surrounding an entire surface of the secondary particle in the form of a film;
a second coating layer containing Al and surrounding, in the form of a film, surfaces of at least some of the plurality of primary particles present in a core portion in the secondary particle; and
a third coating layer containing Al and surrounding, in the form of a film, surfaces of at least some of the plurality of primary particles present in a shell portion in the secondary particle.

2. The positive electrode active material for a lithium secondary battery of claim 1,
wherein the second coating layer is also present in a region within a distance of 1 µm from the center of the secondary particle.

3. The positive electrode active material for a lithium secondary battery of claim 1,
wherein an average thickness of the first coating layer is greater than an average thickness of the third coating layer.

4. The positive electrode active material for a lithium secondary battery of claim 1,
wherein an average thickness of the third coating layer is greater than an average thickness of the second coating layer.

5. The positive electrode active material for a lithium secondary battery of claim 1,
wherein an average thickness of the first coating layer is 0.4 nm to 2.4 nm.

6. The positive electrode active material for a lithium secondary battery of claim 1,
wherein an average thickness of the second coating layer is 0.34 nm to 2.2 nm.

7. The positive electrode active material for a lithium secondary battery of claim 1,
wherein an average thickness of the third coating layer is 0.36 nm to 2.3 nm.

8. The positive electrode active material for a lithium secondary battery of claim 1,
wherein a ratio of the average thickness of the first coating layer to the average thickness of the second coating layer (first coating layer/second coating layer) is 1.03 to 1.2.

9. The positive electrode active material for a lithium secondary battery of claim 1,
wherein a ratio of the average thickness of the third coating layer to the average thickness of the second coating layer (third coating layer/second coating layer) is 1.01 to 1.15.

10. The positive electrode active material for a lithium secondary battery of claim 1,
wherein the first coating layer, the second coating layer, and the third coating layer comprise an Al-containing compound, and the Al-containing compound comprises Al₂O₃ as a main component.

11. The positive electrode active material for a lithium secondary battery of claim 10,
wherein the Al₂O₃ is amorphous.

12. The positive electrode active material for a lithium secondary battery of claim 1,
wherein a content of Al in the positive electrode active material is 0.04 mol% to 0.23 mol% based on the total number of moles of the lithium metal oxide.

13. The positive electrode active material for a lithium secondary battery of claim 1,
wherein an average porosity of the lithium metal oxide is 10% to 20%.

14. The positive electrode active material for a lithium secondary battery of claim 1,
wherein the positive electrode active material has a BET specific surface area of 3.4 m²/g to 4.3 m²/g.

15. The positive electrode active material for a lithium secondary battery of claim 1,
wherein the positive electrode active material has a tap density of 1.5 g/cc to 2.0 g/cc.

16. The positive electrode active material for a lithium secondary battery of claim 1,
wherein the primary particles have an average aspect ratio of 6.5 to 13.

17. The positive electrode active material for a lithium secondary battery of claim 1,
wherein the lithium metal oxide is represented by the following Chemical Formula 1:
[Chemical Formula 1] Li₁₊ₐ(NiₓCo_{y}Mn_{z}M_{w})₁₋ₐO₂
wherein, in Chemical Formula 1, 0.1≤a≤0.3, 0.2≤x≤0.4, 0≤y≤0.2, 0.5≤z≤0.75, 0≤w≤0.2, x+y+z+w=1, and M is Zr, Al, B, Y, Mg, Ti, Nb, W, Sc, Si, V, Fe, Mo, Ce, Hf, Ta, La, Sr, Sn, Sb, Zn, Cu, Ge, Mo, Ru, Ir, or a combination thereof.

18. A method for preparing a positive electrode active material for a lithium secondary battery, comprising:
preparing a lithium metal oxide having a lithium- and manganese-rich composition and having a form of a secondary particle formed by aggregation of a plurality of rod-shaped primary particles; and
forming a coating layer containing Al on the lithium metal oxide by an atomic layer deposition method,
wherein, in the forming of the coating layer containing Al, a first coating layer containing Al and surrounding an entire surface of the secondary particle in the form of a film, a second coating layer containing Al and surrounding, in the form of a film, surfaces of at least some of the plurality of primary particles present in a core portion in the secondary particle, and a third coating layer containing Al and surrounding, in the form of a film, surfaces of at least some of the plurality of primary particles present in a shell portion in the secondary particle are formed.

19. The method for preparing a positive electrode active material for a lithium secondary battery of claim 18,
wherein the prepared lithium metal oxide has an average porosity of 10% to 20%.

20. The method for preparing a positive electrode active material for a lithium secondary battery of claim 18,
wherein the atomic layer deposition is performed for 4 to 23 cycles.

21. A positive electrode for a lithium secondary battery, comprising the positive electrode active material of claim 1.

22. A lithium secondary battery comprising the positive electrode for a lithium secondary battery of claim 21.
